# EUROPEAN PATENT APPLICATION

(11) **EP 4 083 479 A1**
(43) Date of publication of application: **02.11.2022**
(21) Application number: 22166665.4
(22) Date of filing: 05.04.2022
(51) Int. Cl.: F16K 1/22, F16K 5/06, F16K 49/00

(54) **DOME VALVE**

(30) Priority: 28.04.2021 FI 20215495
(71) Applicant: Raumaster OY, 26100 Rauma (FI)
(72) Inventor: Lampila, Teemu, 26100 Rauma (FI)
(74) Representative: Berggren Oy

(57) **Abstract**

The invention relates to a dome valve (10) comprising a dome (15), two shafts (12), an actuator (11), a body (16), and a cover (13), wherein the dome (15) is fastened to the body (16) by means of the shafts (12A, 12B), of which shafts the first one (12A) is connected to the dome (15) and to the actuator (11), for turning the dome (15) by means of the first shaft (12A), wherein the cover (13) is provided with an opening (17), wherein the opening (17) is closable and openable by means of the dome (15). The dome valve (10) further comprises an electric heating system arranged in connection with the dome, for heating the dome (15) of the dome valve (10).

## Description

### Field of the invention

The invention relates to valves in general. In particular, the invention relates to a dome valve according to the preamble of the independent claim.

### Background

As is well known from prior art, a dome valve is a valve type which is used particularly in processes of material handling and which typically comprises a turnable closure element with a spherical surface, i.e. a dome, which is arranged, when opened, to move back from the valve opening substantially entirely and thereby to open the flow connection of the valve. In the present description and the claims, the term dome will be used for this turnable closure element having a typically spherical surface. As is well known from prior art, dome valves are typically used as fill-up valves for e.g. a pneumatic conveyor or another device. A dome valve is also suitable for use as a valve in, for example, pipelines. Dome valves are known for their good performance in processes of granular and wearing media, maintaining pressure tightness. An arrangement of prior art is also known, in which a dome valve comprises an air-filled gasket which is arranged to be mechanically shielded during the opening/closing movement of the dome of the dome valve, whereby the gasket has a significantly longer service life than gaskets which are continuously in contact with the dome.

A dome valve of prior art is disclosed in CN 111720579 A, wherein the dome valve comprises a dome, two shafts, an actuator, a body, and a cover, wherein the dome is fastened to the body by means of the shafts, of which the first shaft is connected to the dome and to the actuator for turning the dome by means of the first shaft, wherein the cover is provided with an opening which is closable and openable by means of the dome, wherein the dome valve further comprises a heating system arranged in connection with the dome, for heating the dome of the dome valve.

A disadvantage in dome valves of prior art has been a deposit of medium forming on the surface of the turning dome of the dome valve under certain conditions, which may cause malfunction or even a failure of the dome valve if the turning movement of the dome is totally prevented. In solutions of prior art, attempts have been made to prevent this by altering the properties of the medium, for example by adjusting the moisture content or the temperature of the medium. Furthermore, arrangements of prior art are known, in which thermal insulation and/or a heating system is provided for the whole dome valve and possibly for a medium container connected to the same. However, a problem with these has often been their insufficient efficiency to prevent the formation of medium deposits. Arrangements of prior art are also known, in which the dome of the dome valve is equipped with a liquid circulation loop which could also be used for heating. A disadvantage of a heating system with liquid circulation is, however, difficult maintenance and installation and, in some cases, poor availability of power.

It is an aim of the invention to provide a dome valve by which the above presented problems relating to prior art can be eliminated or at least minimized.

In particular, it is thus aim of the invention to present a dome valve in which the formation of medium deposits on the surface of the dome of the dome valve is eliminated or at least minimized.

### Summary

For achieving the aims presented above and those emerging later on, the dome valve according to the invention is primarily characterized in what is presented in the characterizing part of the independent claim relating to the dome valve. Preferred embodiments and further features are presented in the dependent claims.

The dome valve according to the invention comprises a dome, two shafts, an actuator, a body, and a cover, wherein the dome is fastened to the body by means of the shafts, of which shafts the first one is connected to the actuator and to the dome for turning the dome by means of the first shaft, wherein the cover is provided with an opening, wherein the opening is closable and openable by a turning movement of the dome, wherein the dome valve further comprises an electric heating system arranged in connection with the dome, for heating the dome of the dome valve.

According to the invention, the electric heating system for the dome of the dome valve comprises a heating element arranged in connection with the dome.

According to a further preferred feature of the invention, the heating element for the dome of the dome valve is arranged on the inner surface of the dome, preferably to follow the shape of the inner surface of the dome.

According to a further preferred feature of the invention, the heating element for the dome valve is fastened to the inner surface of the dome in a detachable way.

According to a further preferred feature of the invention, the heating arrangement for the dome of the dome valve further comprises a shield plate for fastening the heating element to the inner surface of the dome.

According to a further preferred feature of the invention, the heating arrangement for the dome of the dome valve further comprises an elastic filling piece arranged between the shield plate and the heating element, as an elastic support for the fastening of the heating element by means of the shield plate.

According to a further preferred feature of the invention, the electric heating system for the dome of the dome valve further comprises a power supply for delivering energy to the heating element.

According to a further preferred feature of the invention, the power supply to the heating system for the dome of the dome valve is arranged at least partly via the second shaft of the dome valve.

According to a further preferred feature of the invention, the heating system for the dome of the dome valve comprises a thermostat connected to the heating element, for adjusting the temperature of the heating element.

According to a further preferred feature of the invention, the dome valve further comprises a gasket arranged between the dome and the cover, for sealing the outer surface of the dome to the rim of the opening of the cover.

According to a further preferred feature of the invention, the gasket between the cover and the dome of the dome valve is a pressurized gasket.

According to a further preferred feature of the invention, the maintenance temperature of the heating arrangement for the dome of the dome valve is +50...200°C.

According to a preferred aspect of the invention, the dome of the dome valve is provided with an electric heating system. Preferably, an electric heating element is installed on the back side of the dome of the dome valve. Preferably, the heating system comprises a thermostat for adjusting the temperature of the dome. In this way, the invention enables easy and rapid installation as well as ease of maintenance of the heating element. Moreover, power is, in general, readily available.

Preferably, the heating element is attached to the dome in a removable way, whereby it is easily replaceable. Furthermore, an existing dome valve can be easily retrofitted with the heating element. Similarly, a heating element which has already been in use can be re-used for installation even if the dome of the dome valve were replaced.

According to the invention, the heating of the dome of the dome valve is implemented by using electric energy. The electric energy is transmitted to the heating element, for example, by an electric cable, by induction, by means of slide rings, or by using any similar arrangement.

In a preferred embodiment, the heating element for the dome of the dome valve is implemented as a resistor element arranged on the inner surface of the dome and preferably designed to follow the shape of the inner surface. Preferably, the heating element is attached to the inner surface of the dome in a removable but sealed manner, preferably by means of an elastic filling piece and a shield plate.

Preferably, the maintenance temperature of the heating arrangement is +50...200°C, depending on the use.

The invention is suitable for use in connection with, for example, dome valves having a valve size of DN100 to DN600 and a pressure class of 0...16 bar. Preferable use temperatures are -40...+400°C (entire dome valve, inner side).

The dome valve according to the invention and its preferred features provide a number of advantages: The electric heating of the dome prevents particularly condensation caused by cold surfaces in contact with the medium, as well as significant cooling of the medium, and in this way prevents the condensation of moisture and thereby partly the adherence of the medium to the surface of the dome. Furthermore, thanks to the invention, the medium is better maintained warm and processable, for example for pneumatic transmission. The heating element for the dome of the dome valve according to the invention is easy and rapid to install, and the arrangement is easy to maintain.

### Brief description of the drawings

In the following, the invention will be described in more detail with reference to the figures of the appended drawing; however, the invention is by no means intended to be restricted to the details of the figures.
Figure 1 shows a schematic view of a preferred embodiment of a dome valve according to the invention, and
Figure 2 shows a schematic view of another preferred example of a dome valve according to the invention.

### Detailed description

In the following description, the same reference numbers and symbols will be used to identify corresponding elements according to different aspects depicting the invention and its preferred features. In the figures, some recurrent reference symbols may have been omitted for clarity.

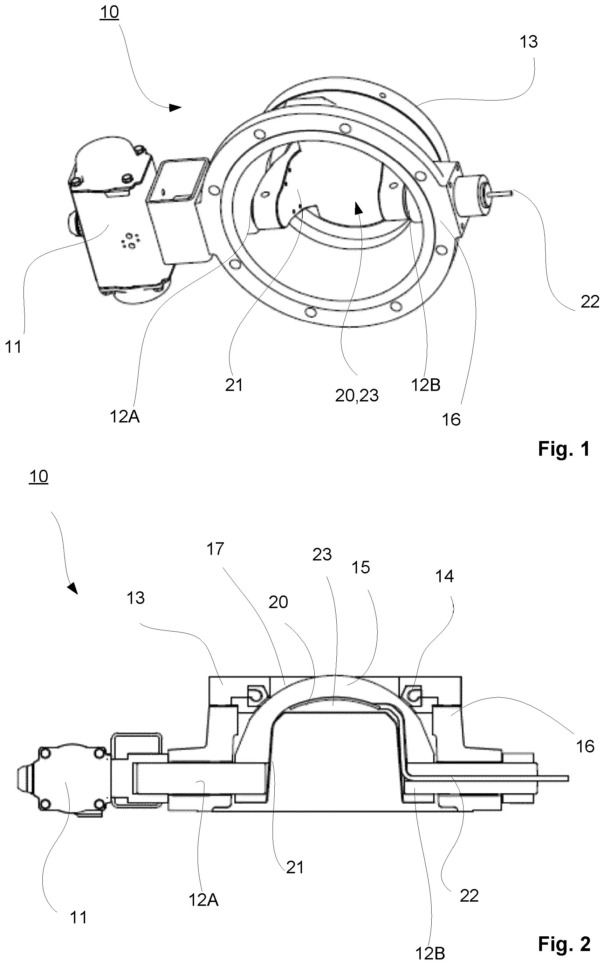

Figure 1 shows a preferred example of a dome valve in a schematic three-dimensional view.

Figure 2 shows the example according to the embodiment of Fig. 1 in a cross-sectional view.

As shown in Figs. 1 and 2, a dome valve 10 comprises a dome 15 which is fastened to a body 16 of the dome valve 10 to be turnable between closed and open positions by means of shafts 12A, 12B. Two shafts 12A, 12B are provided, and they are arranged on substantially opposite sides, with respect to each other, on the circumferences of the body 16 and the dome 15. The turning movement of the dome 15 is about 90 degrees from the closed position shown in the figure, whereby the circular opening 17 of the cover 13 of the dome valve 10, shown in the closed position in the figure, is open after the turning movement. In this way, by the turning movement of the dome 15, the dome valve 10 can be closed by closing the opening 17 of the cover 13 of the dome valve, and correspondingly, the dome valve 10 can be opened from the closed position to the open position by uncovering the opening 17 of the cover 13 of the dome valve 10. For providing the turning movement of the dome 15, the dome valve 10 comprises an actuator 11. The actuator 11 is connected to the first one 12A of the two shafts, which entrains the dome 15 in its turning movement. The dome 15 is curved towards the cover 13 of the dome valve 10 so that the apex of the arc of the dome 15 is accommodated in the opening 17 of the cover 13 when the dome 15 is in the closed position and thus dome valve 10 is in the closed position. A gasket 14 is provided between the dome 15 and the cover 13, which is preferably a pressurized gasket. The gasket 14 thus seals the outer surface of the dome 15 towards the rim of the opening 17 of the cover 13. A heating element 20 is fastened to the inner surface of the dome 15, preferably in a detachable way. The heating element 20 is electrically powered, and its power supply 22 is arranged via the second shaft 12B of the dome 15, preferably the shaft 12B not connected to the actuator. The heating element is fastened to the inner surface of the dome 15 in a detachable but sealed manner, preferably by means of an elastic filling piece 23 and a shield plate 21. Thus, in the example of the figures, the dome 15 of the dome valve 10 is equipped with an electric heating system which is implemented by means of the heating element 20 and its energy supply 22. Preferably, the heating system also comprises a thermostat (not shown) for adjusting the temperature of the dome 15 by adjusting the heat output of the heating element 20. The heating of the dome 15 of the dome valve 10 is implemented by utilizing electric energy, and the electric power is transmitted to the heating element 20 by means of the energy supply 22, for example by an electric cable, by induction, by means of slide rings, or by using another corresponding arrangement. According to the preferred embodiment shown in the figures, the heating element 20 for the dome 15 of the dome valve 10 is implemented as a resistor element arranged on the inner surface of the dome 15 and preferably designed to follow the shape of the lower surface of the dome 15. Preferably, the heating element 20 is fastened to the inner surface of the dome 15 in a detachable but sealed manner, preferably by means of an elastic filling piece 23 and a shield plate 21.

Although, in the description above, some functions were presented with reference to certain features and examples only, these functions can also be implemented in connection with other features and examples, irrespective of whether this was mentioned or not. Although some features were described with reference to certain examples only, these features may be included in other examples, irrespective of whether this was mentioned or not.

Only certain preferred embodiments of the invention were described above; the invention should not be limited narrowly to these but a number of changes and modifications are possible within the scope defined in the following claims.

### Reference symbols used in the drawing

10 dome valve
11 actuator
12A, 12B shaft
13 cover
14 gasket
15 dome
16 body
17 opening
20 heating element
21 shield for the heating element
22 energy supply to the heating element
23 filling piece

## Claims

1. A dome valve (10) comprising a dome (15), two shafts (12), an actuator (11), a body (16), and a cover (13),
- wherein the dome (15) is fastened to the body (16) by means of the shafts (12A, 12B),
- of which shafts the first one (12A) is connected to the dome (15) and to the actuator (11), for turning the dome (15) by means of the first shaft (12A),
- wherein the cover (13) is provided with an opening (17), wherein the opening (17) is closable and openable by means of the dome (15),
- in which dome valve (10) the dome (15) is curved towards the cover (13) of the dome valve (10) so that the apex of the arc of the dome (15) is accommodated in the opening (17) of the cover (13) when the dome (15) is in the closed position and the dome valve (10) is thus in the closed position,
- wherein the dome valve (10) further comprises a heating system arranged in connection with the dome, for heating the dome (15) of the dome valve (10),
**characterized in that**
the heating system arranged in connection with the dome, for heating the dome (15) of the dome valve (10), is an electric heating system, and that the electric heating system comprises a heating element (20) arranged in connection with the dome (15).

2. The dome valve according to claim 1, **characterized in that** the heating element (20) is arranged on the inner surface of the dome (15), preferably to follow the shape of the inner surface of the dome (15).

3. The dome valve according to claim 1 or 2, **characterized in that** the heating element (20) is fastened to the inner surface of the dome (15) in a detachable way.

4. The dome valve according to any of the preceding claims 1 to 3, **characterized in that** the heating arrangement further comprises a shield plate (21) for fastening the heating element (20) to the inner surface of the dome (15).

5. The dome valve according to claim 4, **characterized in that** the heating arrangement further comprises an elastic filling piece (23) arranged between the shield plate (21) and the heating element (20), as an elastic support for the fastening of the heating element (20) by means of the shield plate (21).

6. The dome valve according to any of the preceding claims 1 to 5, **characterized in that** the electric heating system further comprises a power supply (22) for supplying power for the heating element (20).

7. The dome valve according to claim 6, **characterized in that** the power supply (22) is arranged at least partly via the second shaft (12B) of the dome valve (10).

8. The dome valve according to any of the preceding claims 1 to 7, **characterized in that** the heating system comprises a thermostat connected to the heating element (20), for adjusting the temperature of the heating element.

9. The dome valve according to any of the preceding claims, **characterized in that** the dome valve (10) further comprises a gasket (14) arranged between the dome (15) and the cover (13), for sealing the outer surface of the dome (15) to the rim of the opening (17) of the cover (13).

10. The dome valve according to claim 9, **characterized in that** the gasket (14) is a pressurized gasket.

11. The dome valve according to any of the preceding claims, **characterized in that** the maintenance temperature of the heating arrangement is +50...200°C.
